# EUROPÄISCHE PATENTANMELDUNG

(11) **EP 2 143 399 A1**
(43) Veröffentlichungstag der Anmeldung: **13.01.2010**
(21) Anmeldenummer: 09008804.8
(22) Anmeldetag: 06.07.2009
(51) Int. Cl.: A61C 8/00

(54) **Implantat**

(30) Priorität: 07.07.2008 CH 10492008
(71) Anmelder: Steinemann, Samuel, 4054 Basel (CH)
(72) Erfinder: Steinemann, Samuel, 4054 Basel (CH)
(74) Vertreter: Schaad, Balass, Menzl & Partner AG

(57) **Zusammenfassung**

Implantate, die nicht oder weniger durch Gewebe hindurch sichtbar sind bestehen aus Metallen mit einer im Vergleich zu Titan höheren Oxydbildungsenthalpie.

## Beschreibung

Die vorliegende Erfindung betrifft Implantate aus Metall für den Zahnersatz und die operative Frakturbehandlung.

Zahnimplantate sind künstliche Zahnwurzeln, welche zum Ersatz von verlorenen natürlichen Zähnen in den Kieferknochen geschraubt und mit einer Krone, Brücke oder dergl. versehen werden. Andere Implantate dienen der operativen Behandlung von Knochenbrüchen mit dem Ziel der funktionsstabilen Osteosynthese mit simultaner Wiederherstellung der Okklusion.

Als Material für solche Implantate werden wegen ihrer Biokompatibilität hoch legierte rostfreie Stähle und Titan verwendet. Im Falle von Titan beruht die Trägheit auf dem an der Oberfläche stets vorhandenen, wenige Nanometer dünnen Oxidfilm, welcher in einem grossen pH-Bereich die Eigenschaft besitzt zu hydrolisieren. Dadurch befinden sich an der Oberfläche freie OH-Gruppen, die den menschlichen Proteinen als Anker dienen, an die sie andocken können.

Implantate aus Stahl oder Titan haben aber den Nachteil, dass sie sich in sehr hellem Licht durch darüber liegendes Gewebe als dunkler Schatten abzeichnen, weil Weichgewebe und sogar Knochen helles Licht nicht vollständig abschirmen. Dies ist vor allem in den Körperbereichen, die nicht durch Kleidung bedeckt sind, also im Bereich des Kopfes und vor allem des Gesichts, der Hand und vor allem der Finger, des Unterarms und des Unterschenkels aus kosmetischer Sicht unbefriedigend.

Der Erfindung liegt die Aufgabe zugrunde, ein Implantat aus einem Material zu finden, das diesen Nachteil nicht aufweist. Das Implantat sollte möglichst den Aspekt von Gewebe haben und hell erscheinen.

Es wurde nun überraschend gefunden, dass für die unerwünschte Verfärbung des oberflächlichen Oxyds eines Implantats die Bildungsenthalpie der Oxyde verantwortlich ist. Erfindungsgemäss wird die Aufgabe daher gelöst durch ein Implantat aus einem Material mit höherer Oxydbildungsenthalpie als Titan.

Ein besonders bevorzugtes Material ist Zirkon-Metall(Zr). Weitere bevorzugte Materialien sind Niob (Nb), Tantal (Ta) und Hafnium (Hf).

Die Bildungsenthalpie des Titandioxyds TiO₂ beträgt -944,0 kJ/mol. Die folgenden Oxyde haben höhere Bildungsenthalpien:
Die Bildungsenthalpie von HfO₂ beträgt -1144,7 kJ/mol. Die Bildungsenthalpie von ZrO₂ beträgt -1100,6. Für Ta₂O₅ beträgt die Bildungsenthalpie -2046,0 kJ/mol, d.h. -1023,0 pro Metallatom. Schliesslich beträgt die Bildungsenthalpie von Nb₂O₅ -1899,5, d.h. -949,75 pro Metallatom, also knapp über dem Wert für Titan.

Aus diesen Werten ergibt sich, dass diese Metalle stabilere Oxyde bilden als Titan und sich somit im implantierten Zustand weniger stark verfärben können.

Die Oxydfilme werden durch anodische Oxydation erzeugt, d.h. in stark oxydierenden Elektrolyten, wie Schwefelsäure, Oxalsäure oder Phosphorsäure an der Anode. Die entstehenden Schichtdicken haben einen Einfluss auf die Farbwirkung. Schichten höherer Ordnung besitzen weichere Farben und sind daher bevorzugt.

Um die Stabilität der diversen Oxyde zu vergleichen wurde die Veränderung von Proben durch Kochen in isotoner NaCl-Lösung beobachtet. Damit wurden die Bedingungen, denen die Implantate im Körper ausgesetzt sind, simuliert. TiO₂ ist beim Kochen in isotoner NaCl-Lösung nicht stabil und verfärbt sich. Die Metalle mit höherer Oxydbildungsenthalpie waren bei diesem Versuch stabil.

Das Metall mit dem höchsten Wert ist Hafnium, das jedoch sehr teuer ist und deswegen zumindest vorläufig nur in speziellen Ausnahmefällen zum Einsatz kommen wird.

Zirkonium mit einem ebenfalls wesentlich höheren Wert der Oxydbildungsenthalpie als für Titan ist auch bezüglich der Materialkosten konkurrenzfähig. Deshalb bietet sich dieses Material als bevorzugter Ersatz für Titan zur Herstellung von Implantaten an.

Auch Tantal hat einen wesentlich höheren Wert der Bildungsenthalpie als Titan und kommt daher ebenfalls als bevorzugtes Material für Implantate in Frage.

Schliesslich hat sich auch für Niob gezeigt, dass dessen Oxyd Nb₂O₅, trotz des geringfügig höheren Werts der auf ein Nb-Atom bezogenen Bildungsenthalpie dem Titan ebenfalls überlegen ist und ebenfalls in kochender isotoner NaCl-Lösung stabil ist.

## Patentansprüche

1. Implantat aus Metall für den Zahn- und die operative Frakturbehandlung, **dadurch gekennzeichnet, dass** es aus einem Material mit einer im Vergleich zu Titan höheren Oxydbildungsenthalpie besteht.

2. Implantat nach Anspruch 1, **dadurch gekennzeichnet, dass** es aus Zirkonium besteht.

3. Implantat nach Anspruch 1, **dadurch gekennzeichnet, dass** es aus Hafnium besteht.

4. Implantat nach Anspruch 1, **dadurch gekennzeichnet, dass** es aus Tantal besteht.

5. Implantat nach Anspruch 1, **dadurch gekennzeichnet, dass** es aus Niob besteht.
